# EUROPEAN PATENT APPLICATION

(11) **EP 1 662 547 A2**
(43) Date of publication of application: **31.05.2006**
(21) Application number: 05253582.0
(22) Date of filing: 10.06.2005
(51) Int. Cl.: H01J 61/067, H01J 61/30, H01J 61/54

(54) **Flat lamp**

(30) Priority: 13.10.2004 KR 2004081763
(71) Applicant: Samsung Corning Co., Ltd., Suwon-si, Gyeonggi-do (KR)
(72) Inventor: Park,Hyoung-bin, c/o 302-1703 Saetbyeol Maeul Apt., Seongnam-si, Gyeonggi-do (KR); Lee, Young-dong, c/o Samsung Adv. Inst. of Tech., Yongin-si, Gyeonggi-do (KR); Kim, Gi-young, c/o 103-1403 Minsok Maeul Apt., Yongin-si, Gyeonggi-do (KR); Son, Seung-hyung, c/o 105-1006 Sinmiju Apt., Hwaseong-si, Gyeonggi-do (KR); Kim, Young-mo, c/o 110-1102 Dongsuwon LG Vge.., Suwon-si, Gyeonggi-do (KR); Lee, Seong-eui, c/o 125-903 Sibeom Hanshin Apt., Seongnam-si, Gyeonggi-do (KR); Sang, hun Jang,, Seocho-gu, Seoul (KR)
(74) Representative: Greene, Simon Kenneth

(57) **Abstract**

Provided is a flat lamp that includes: an upper substrate and a lower substrate arranged to face each other and separated by a predetermined distance, with at least one discharge cell formed between the upper and lower substrates; and at least one pair of a first electrode portion and a second electrode portion formed on at least one of the upper and lower substrates, wherein one pair corresponds to one discharge cell, and the first electrode portion is composed of an electrode and the second electrode portion is composed of a plurality of electrodes.

## Description

The present invention relates to a flat lamp, and more particularly, to a flat lamp which can improve brightness and luminous efficiency without increasing a discharge voltage.

Flat lamps which are usually used as back lights for liquid crystal displays (LCDs), have advanced from edge-light or direct-light type flat lamps using conventional cold cathode fluorescent lamps to surface-discharge or facing-discharge type flat lamps in which the entire space below a light emitting surface is a discharge space in consideration of luminous efficiency, uniformity of brightness, and the like. Although a surface-discharge flat lamp has the advantage of having a stable discharge compared to a facing-discharge flat lamp, the entire brightness of the surface discharge flat lamp is inferior to that of the facing-discharge flat lamp.

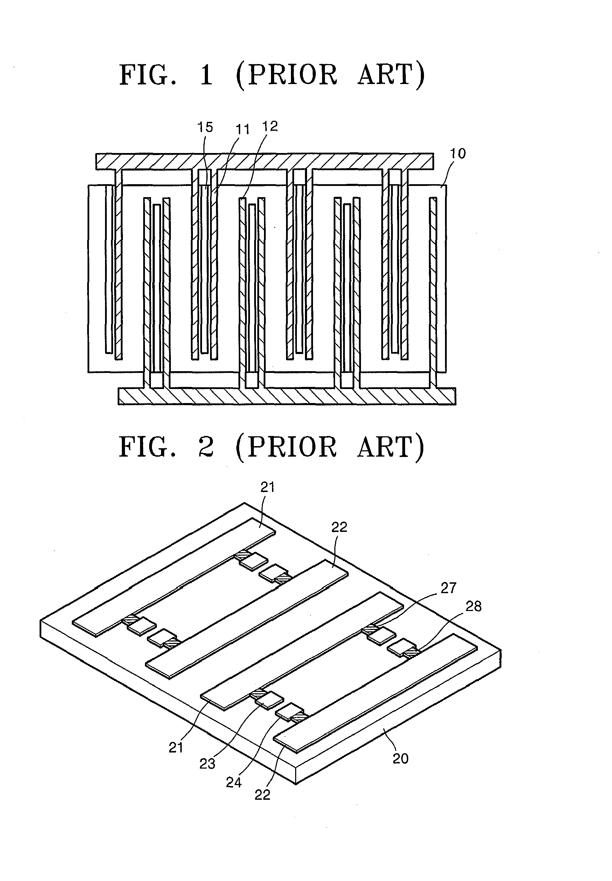

FIG. 1 illustrates a lower substrate of a conventional surface-discharge type flat lamp. Referring to FIG. 1, a plurality of spacers 15 are arranged to divide a discharge space into a plurality of discharge cells and maintain a constant distance between a lower substrate 10 and an upper substrate (not shown). In addition, pairs of first and second electrodes 11 and 12 are formed on the lower substrate 10, one pair corresponding to one discharge cell. In such a structure, when a predetermined voltage is applied to each of the first and second electrodes 11 and 12, a gas discharge is generated in each of the discharge cells.

In general, when a gas discharge is used, luminous efficiency increases as a discharge path is longer. However, an increased discharge path creates an increase in a discharge voltage and has an adverse effect on the cost and lifetime of the flat lamp. Therefore, in the conventional flat lamp with the above-described structure, when making the discharge path long by placing the first and second electrodes 11 and 12 far apart from each other, the luminous efficiency may be increased, but the discharge voltage also increases.

A flat lamp to solve such problems is illustrated in FIG. 2. Referring to FIG. 2, pairs of first and second electrodes 21 and 22 are formed on a lower substrate 20, one pair corresponding to one discharge cell. In addition, first and second auxiliary electrodes 23 and 24 are formed between the first and second electrodes 21 and 22. The first and second electrodes 21 and 22 are respectively connected to the first and second auxiliary electrodes 23 and 24, through resistance layers 27 and 28, respectively. In the above-described structure, the start of a discharge is initiated by applying a voltage to the first and second auxiliary electrodes 23 and 24. However, such a flat lamp needs an additional process of forming the resistance layers 27 and 28. Furthermore, heat loss by the resistance layers 27 and 28 occurs, and a difference in brightness is generated between a portion which has the auxiliary electrodes 23 and 24 and a portion which does not have the auxiliary electrodes 23 and 24.

According to an aspect of the present invention, there is provided a flat lamp comprising: an upper substrate and a lower substrate arranged to face each other and separated by a predetermined distance, with at least one discharge cell formed between the upper and lower substrates; and at least one pair of a first electrode portion and a second electrode portion formed on at least one of the upper and lower substrates, one pair corresponding to one discharge cell, wherein the first electrode portion is composed of an electrode and the second electrode portion is composed of a plurality of electrodes.

A direct current voltage may be applied between the electrode of the first electrode portion and the electrodes of the second electrode portion. The electrode of the first electrode portion may be a cathode electrode and the electrodes of the second electrode portion may be anode electrodes.

An identical voltage may be applied to the electrodes of the second electrode portion.

A lower voltage may be applied to the electrode of the second electrode portion closer to the electrode of the first electrode portion. In this case, the electrodes of the second electrode portion may be connected to each other through a dielectric material and an external voltage may be applied to one of the electrodes of the second electrode portion which is most distant from the electrode of the first electrode portion.

The discharge cells may be divided by spacers.

The present invention provides a flat lamp which can improve brightness and luminous efficiency by lengthening a discharge path without increasing a discharge voltage.

The above and other features and advantages of the present invention will become more apparent by describing in detail exemplary embodiments thereof with reference to the attached drawings in which:
FIG. 1 illustrates a conventional flat lamp;
FIG. 2 illustrates another conventional flat lamp;
FIG. 3 is an exploded perspective view of a flat lamp according to an embodiment of the present invention;
FIG. 4 is a view illustrating an arrangement of electrodes formed on a bottom surface of a lower substrate of the flat lamp illustrated in FIG. 3;
FIG. 5 is a cross-sectional view of a portion of the flat lamp illustrated in FIG. 3;
FIG. 6 is a view illustrating another arrangement of electrodes formed on a bottom surface of a lower substrate of the flat lamp illustrated in FIG. 3;
FIG. 7 is a cross-sectional view of a portion of a modified example of the flat lamp illustrated in FIG. 3
FIG. 8 is an exploded perspective view of a flat lamp according to an embodiment of the present invention;
FIG. 9 is a cross-sectional view of a portion of the flat lamp illustrated in FIG. 8; and
Fig. 10 is a cross-sectional view of a portion of a modified example of the flat lamp illustrated in FIG. 8.

Hereinafter, exemplary embodiments of the present invention will be described in more detail with reference to the attached drawings. Like reference numerals in the drawings denote like elements.

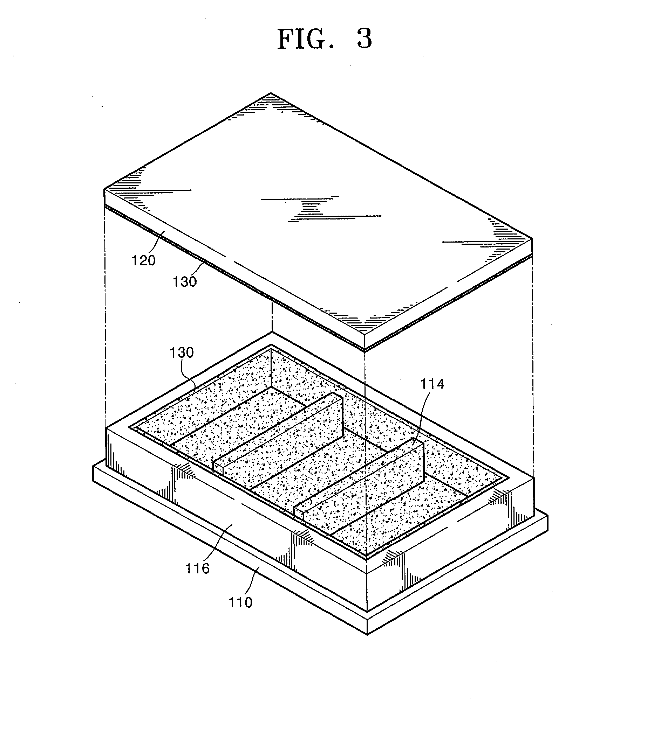

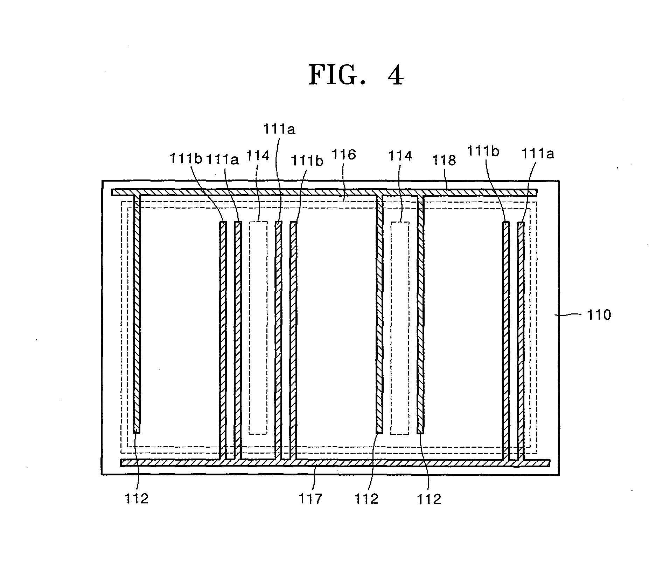

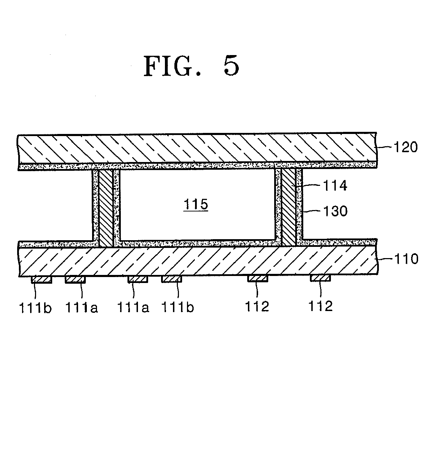

FIG. 3 is an exploded perspective view of a flat lamp according to an embodiment of the present invention. FIG. 4 is a view illustrating arrangement of electrodes formed on a bottom surface of a lower substrate of the flat lamp illustrated in FIG. 3. FIG. 5 is a cross-sectional view of a portion of the flat lamp illustrated in FIG. 3.

Referring to FIGS. 3 and 5, a lower substrate 110 and an upper substrate 120 are arranged to face each other and separated by a predetermined distance. In general, the lower substrate 110 and the upper substrate 120 are made of glass. At least one discharge cell 115 in which a plasma discharge occurs is formed between the lower substrate 110 and the upper substrate 120. The discharge cells 115 are filled with a discharge gas. A frame 160 is formed along edges of the lower substrate 110 and the upper substrate 120 such that a space between the lower substrate 110 and the upper substrate 120 is closed.

At least one spacer 114 is formed between the lower and upper substrates 110 and 120 such that a constant distance between the lower and upper substrates 110 and 120 is maintained and the spacers 114 divide a space between the lower and upper substrates 110 and 120 to form the discharge cells 115. Each of the spacers 114 may be formed with its both ends separated from the frame 160 such that each of the discharge cells 115 is partially open. Alternatively, each of the spacers 114 may be formed with its one end separated from the frame 160 such that each of the discharge cells 115 is partially open. Alternatively, each of the spacers 114 may be formed with its both ends attached to the frame 160 such that each of the discharge cells 115 is closed.

A fluorescent layer 130 may be formed on inner surfaces of the lower and upper substrates 110 and 120, surfaces of the spacers 114, and an inner surface of the frame 160. The fluorescent layer 130 is excited by UV emitted due to the discharge in the discharge cells 115 to emit visible light.

Referring to FIG. 4, a plurality of discharge electrodes for generating a discharge in the discharge cells 115 are formed on the bottom surface of the lower substrate 110. Specifically, at least one pair of a first electrode portion and a second electrode portion is formed on the bottom surface of the lower substrate 110, one pair corresponding to one discharge cell 115. Thus, the spacers 114 are disposed between the adjacent first electrode portions and also, between the adjacent second electrode portions. The first electrode portion is composed of a first electrode 112 and the second electrode portion is composed of a plurality of second electrodes 111 a and 111 b. Preferably, the second electrode portion may be composed of two electrodes 111 a and 111 b. The second electrode portion may be composed of three or more electrodes. The entire first electrodes 112 and the entire second electrodes 111 a and 111 b are commonly connected to a first line 118 and a second line 117, respectively. Thus, an identical voltage is applied to the second electrodes 111 a and 111 b formed for all the discharge cells 115.

A direct current voltage is applied between the first electrode 112 of the first electrode portion and the second electrodes 111a and 111b of the second electrode portion. In this case, to increase the luminous efficiency of the flat lamp, the first electrode 112 may be a cathode electrode and the second electrodes 111 a and 111 b may be anode electrodes. A region in which the most amount of input energy is used in the discharge space is a cathode region where a strong electric field is applied and vigorous ionization occurs. Thus, in a glow discharge, most of the electrical energy is first used in the cathode region and light energy is generated in a positive column with little electrical energy consumed. Accordingly, to reduce an area of the cathode region and increase an area of the positive column, the first electrode 112 is used as a cathode electrode and the plurality of the second electrodes 111 a and 111 b are used as anode electrodes, thereby increasing brightness and luminous efficiency.

When a predetermined voltage is applied between the first electrode 112 which is a cathode electrode and the second electrodes 111 a and 111 b which are anode electrodes, a start discharge occurs between the first electrode 112 and the second electrode 111 b, which are adjacent to each other, for each discharge cell 115. When a distance between the first electrode 112 and the second electrode 111 b is shorter than that in the conventional flat lamp, the discharge voltage can be reduced. In addition, the generated discharge is extended to the second electrode 111 a which is more distant from the first electrode 112 and as a result, a main discharge occurs between the first electrode 112 and the second electrodes 111a and 111b. When an average distance between the first electrode 112 and the second electrodes 111 a and 111 b, is longer than that in the conventional flat lamp, an average discharge path increases, and thus, luminous efficiency can be increased.

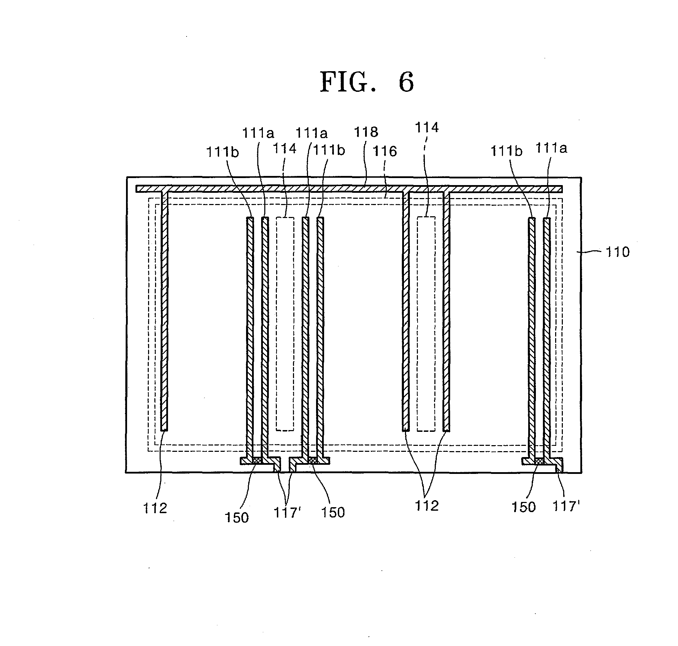

FIG. 6 is a view illustrating another arrangement of electrodes formed on a bottom surface of a lower substrate 110 of the flat lamp illustrated in FIG. 3. Referring to FIG. 6, pairs of a first electrode portion and a second electrode portion formed on the bottom surface of the lower substrate 110, one pair corresponding to one discharge cell 115, wherein the first electrode portion is composed of a first electrode 112 and the second electrode portion is composed of a plurality of second electrodes 111 a and 111 b. The first electrode 112 may be a cathode electrode and the second electrodes 111 a and 111 b may be anode electrodes. The second electrodes 111 a and 111 b are connected to each other through a dielectric material 150. An external voltage is applied to the second electrode 111 a which is more distant from the first electrode 112 through a second line 117'. The entire first electrodes 112 are commonly connected to a first line 18. Although the second electrode portion is composed of two electrodes in the structure illustrated in FIG. 6, the second electrode portion may be composed of three or more electrodes. The external voltage may be applied to one of the electrodes of the second electrode portion which is most distant from the first electrode 112.

In the structure illustrated in FIG. 6, when an external voltage, for example, of 3000 V is applied to the second electrode 111 a which is more distant from the first electrode 112, a voltage which is lower than 3000 V, for example, 2500 V is applied to the second electrode 111 b which is closer to the first electrode 112 due to a voltage drop by the dielectric material 150. When a lower voltage is applied to the second electrode 111 b which is closer to the first electrode 112 as described above, discharge generated between the first electrode 112 and the second electrode 111 b which are adjacent to each other can be more smoothly extended to the second electrode 111 a than when a voltage applied between the first electrode 112 and the second electrode 111 b is identical to a voltage applied between the first electrode 112 and the second electrode 111 a.

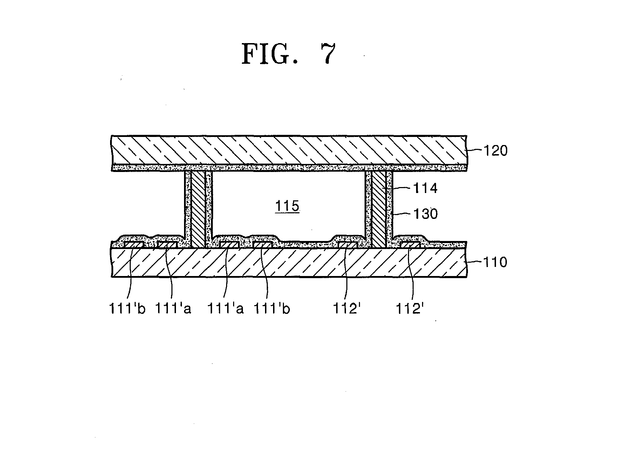

FIG. 7 is a cross-sectional view of a portion of a modified example of the flat lamp illustrated in FIG. 3. Referring to FIG. 7, discharge electrodes are formed on a top surface of a lower substrate 110. Specifically, at least one pair of a first electrode portion and a second electrode portion is formed on the top surface of the lower substrate 110, one pair corresponding to one discharge cell 115, and the first electrode portion is composed of a first electrode 112' and the second electrode portion is composed of a plurality of second electrodes 111 a' and 111 b'.

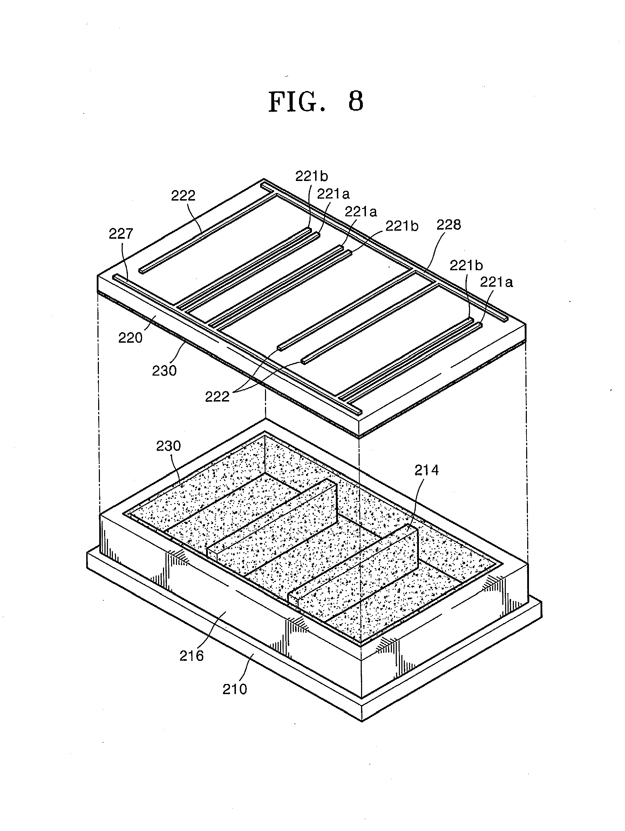

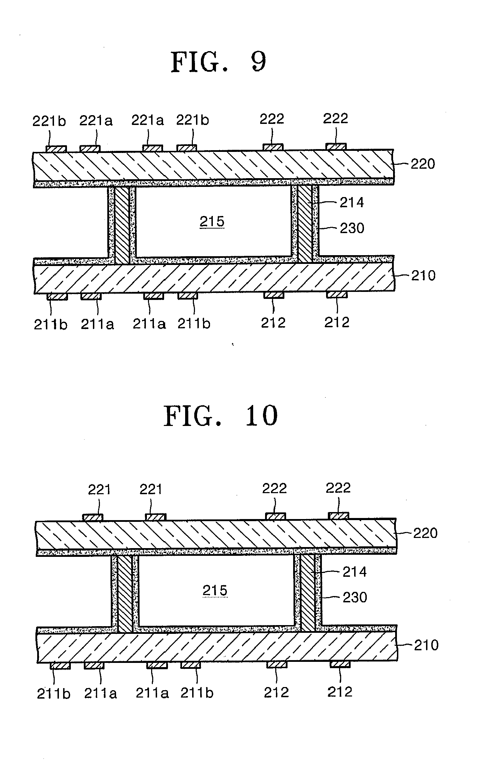

FIG. 8 is an exploded perspective view of a flat lamp according to an embodiment of the present invention. FIG. 9 is a cross-sectional view of a portion of the flat lamp illustrated in FIG. 8. Hereinafter, portions different from those described in the previous embodiments will be mainly described.

Referring to FIGS. 8 and 9, a lower substrate 210 and an upper substrate 220 are arranged to face each other and separated by a predetermined distance, with at least one discharge cell 215 formed between the lower substrate 210 and the upper substrate 220. A frame 260 is formed such that a space between the lower substrate 210 and the upper substrate 220 is closed.

At least one spacer 214 is formed between the lower and upper substrates 210 and 220 such that the spacers 114 divide a space between the lower and upper substrates 210 and 220 to form the discharge cells 215. A fluorescent layer 230 may be formed on inner surfaces of the lower and upper substrates 210 and 220, surfaces of the spacers 214, and an inner surface of the frame 260.

At least one pair of a first electrode portion and a second electrode portion is formed on a bottom surface of the lower substrate 210, one pair corresponding to one discharge cell 215, and the first electrode portion is composed of a first electrode 212 and the second electrode portion is composed of a plurality of second electrodes 211 a and 211 b. The first electrode 212 may be a cathode electrode and the second electrodes 211 a and 211 b may be anode electrodes. Preferably, the second electrode portion may be composed of two electrodes 211 a and 211 b. The second electrode portion may be composed of three or more electrodes. Alternatively, the first electrode 212 and the second electrodes 211a and 211 b may be formed on a top surface of the lower substrate 210.

The entire first electrodes 212 and the entire second electrodes 211 a and 211 b are commonly connected to a first line and a second line (not shown), respectively. In this case, an identical voltage is applied to the second electrodes 211a and 211b.

The second electrodes 211 a and 211 b may be connected to each other through a dielectric material (not shown), as illustrated in FIG. 6. In this case, an external voltage is applied to the second electrode 211 a which is more distant from the first electrode 212 and a voltage lower than the external voltage is applied to the second electrode 211 b which is closer to the first electrode 212 due to a voltage drop by the dielectric material.

In the embodiment illustrated in FIGS. 9, discharge electrodes are further formed on a top surface of the upper substrate 220. Specifically, pairs of a third electrode portion and a fourth electrode portion are formed on the top surface of the upper substrate 220, one pair corresponding to one discharge cell 215. The third electrode portion and the fourth electrode portion correspond to the first electrode portion and the second electrode portion, respectively. Thus, the third electrode portion is composed of a third electrode 222 and the fourth electrode portion is composed of a plurality of fourth electrodes 221a and 221 b. In this case, the fourth electrode portion is composed of the same number of electrodes as the second electrode portion. The third electrode 222 may a cathode electrode and the fourth electrodes 221a and 221 b may be anode electrodes. Alternatively, the third electrode 222 and the fourth electrodes 221 a and 221 b may be formed on a bottom surface of the upper substrate 220.

The entire third electrode 222 and the entire fourth electrodes 221a and 221 b are commonly connected to a third line and a fourth line (not shown), respectively. In this case, an identical voltage is applied to the fourth electrodes 221a and 221 b.

The fourth electrodes 221a and 221 b may be connected to each other through a dielectric material (not shown), as illustrated in FIG. 6. In this case, an external voltage is applied to the fourth electrode 221 a which is more distant from the third electrode 222 and a voltage lower than the external voltage is applied to the fourth electrode 221 b which is closer to the third electrode 222 due to a voltage drop by the dielectric material.

When the discharge electrodes are formed on both the lower substrate 210 and the upper substrate 220 as described above, a discharge can be more smoothly generated in the discharge cells 215, thereby increasing uniformity of brightness.

Fig. 10 is a cross-sectional view of a portion of a modified example of the flat lamp illustrated in FIG. 8.

Referring to FIG. 10, the number of an electrode 221 of the fourth electrode portion formed on the upper substrate 220 is smaller than the number of the second electrodes 211 a and 211 b of the second electrode portion formed on the lower substrate 210. Although the second electrode portion is composed of two electrodes 211a and 211 b and the fourth electrode portion is composed of the electrode 221 in FIG. 10, the embodiment of the present invention is not limited thereto and the second electrode portion may be composed of three or more electrodes and the fourth electrode portion may be composed of two or more electrodes. When the fourth electrode portion formed on the upper substrate 220 is composed of the electrodes, of which number is smaller than that of the electrodes of the second electrode portion formed on the lower substrate 210, blocking of visible light emitted toward the upper substrate 220 by the discharge due to the discharge electrodes formed on the upper substrate 220 can be reduced.

The flat lamp according to the present invention has the following advantages.

First, by forming pairs of a first electrode portion and a second electrode portion on at least one of an upper substrate and a lower substrate, one pair corresponding to one discharge cell, and the first electrode portion is composed of an electrode and the second electrode portion is composed of a plurality of electrodes, a discharge voltage can be reduced and luminous efficiency can be increased.

Second, the electrode of the first electrode portion functions as a cathode electrode and the electrodes of the second electrode portion function as anode electrodes, and thus, brightness and luminous efficiency can be increased.

Third, the electrodes of the second electrode portion are connected to each other through a dielectric material, and thus, uniformity of brightness can be increased.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A flat lamp comprising:
an upper substrate and a lower substrate arranged to face each other and separated by a predetermined distance, with at least one discharge cell formed between the upper and lower substrates; and
at least one pair of a first electrode portion and a second electrode portion formed on at least one of the upper and lower substrates, one pair corresponding to one discharge cell,
wherein the first electrode portion is composed of a first electrode and the second electrode portion is composed of a plurality of second electrodes.

2. A flat lamp according to claim 1 wherein each of the plurality of second electrodes are spaced at different distances from the first electrode.

3. The flat lamp of claim 1 adapted to be driven by a direct current voltage is applied between the electrode of the first electrode portion and the electrodes of the second electrode portion.

4. The flat lamp of claim 1, 2 or 3, wherein the electrode of the first electrode portion is a cathode electrode and the electrodes of the second electrode portion are anode electrodes.

5. The flat lamp of claim 3 or 4, adapted to provide wherein an identical voltage is applied to the electrodes of the second electrode portion.

6. The flat lamp of claim 3 or 4, adapted to provide a lower voltage is applied to the electrode of the second electrode portion closer to the electrode of the first electrode portion.

7. The flat lamp of claim 6, wherein the electrodes of the second electrode portion are connected to each other through a dielectric material and an external voltage is applied to one of the electrodes of the second electrode portion which is most distant from the electrode of the first electrode portion.

8. The flat lamp of any preceding claim, wherein the discharge cells are divided by spacers.

9. The flat lamp of claim 8, wherein the spacers are formed such that each of the discharge cells is closed.

10. The flat lamp of claim 8, wherein the spacers are formed such that each of the discharge cells is partially open.

11. A flat lamp according to any preceding claim wherein at least one pair of a first electrode portion and a second electrode portion areformed on the lower substrate.

12. The flat lamp of any precedimg claim, wherein the number of the second electrodes comprising the second electrode portion is two.

13. The flat lamp of any preceding claim, wherein at least one pair of a third electrode portion and a fourth electrode portion is formed on the upper substrate, one pair corresponding to one discharge cell.

14. The flat lamp of claim 13, wherein the third electrode portion is composed of a third electrode and the fourth electrode portion is composed of at least one fourth electrode.

15. The flat lamp of claim 14, wherein the third electrode portion and the fourth electrode portion correspond to the first electrode portion and the second electrode portion, respectively.

16. The flat lamp of claim 14 or 15, wherein the third electrode is a cathode electrode and the fourth electrodes are anode electrodes.

17. The flat lamp of any of claims 14 to 16, wherein the number of the fourth electrodes composing the fourth electrode portion is two.

18. The flat lamp of any of claims 14 to 16, wherein the number of the fourth electrodes is identical to the number of the second electrodes.

19. The flat lamp of any of claims 14 to 16, wherein the number of the fourth electrodes is less than the number of the second electrodes.

20. The flat lamp of any of claims 14 to 16, arranged to apply an identical voltage to each of the fourth electrodes.

21. The flat lamp of any of claims 14 to 19 wherein the fourth electrodes are spaced from the third electrode with different spacings.

22. The flat lamp of claim 20, arranged to apply a lower voltage to the fourth electrode closer to the third electrode.

23. The flat lamp of claim 22, wherein the fourth electrodes are connected to each other through a dielectric material and an external voltage is applied to one of the fourth electrodes which is most distant from the third electrode.
